# EUROPEAN PATENT SPECIFICATION

(11) **EP 1 473 952 B1**
(45) Date of publication and mention of the grant of the patent: **30.01.2008**
(21) Application number: 03445048.6
(22) Date of filing: 29.04.2003
(51) Int. Cl.: H04Q 7/32

(54) **Mobile apparatus with remote lock and control function**
Mobiles Gerät mit ferngesteuerter Verriegelungs-und Kontrollfunktion
Appareil mobile avec verrouillage et fonction de contrôle commandés à distance

(43) Date of publication of application: 03.11.2004
(73) Proprietor: Sony Ericsson Mobile Communications AB, 221 88 Lund (SE)
(72) Inventor: Rydgren, Ake, 24734 Södra Sandby (SE); Jendbro, Magnus, 22473 Lund (SE)
(74) Representative: Akerman, Marten Lennart

(56) References cited:
- GB-A- 2 380 356
- US-A- 6 064 880
- US-A1- 2003 054 840

## Description

### Field of invention

The present invention relates to a mobile apparatus with a remote lock and control function, more particularly, after theft or loss of the apparatus, it is possible to remotely lock it by sending a lock command, e.g. an SMS message. The apparatus may also be controlled to upload information enabling the user to retrieve valuable information stored in the apparatus.

### State of the art

A lot of phones are lost or stolen and these phones contain an increasing amount of private, perhaps sensitive, information. It would be useful if a lost or stolen phone could be completely locked as soon as possible after it is lost by the use of a friend's phone or a web site. The phone lock should be possible to reverse if it is found, so that it immediately can be used with its original information.

There are four actions a user can perform today related to phone theft.

One is to contact the operator and invalidate the IMEI number. After contacting the operator, it typically takes a few days before the phone is invalidated in the network.

The second action is to invalidate the SIM card itself in the network. This invalidation will in most cases take only a few minutes to implement in the network.

The third action, which is of a preventive nature, is to use the phone locking mechanism usually implemented in mobile phones, in which case the user must either enter a code at each power on or the phone is automatically locked when used with another SIM card.

The fourth action is to enable the SIM card's PIN code, in which case the phone will be inaccessible while using the locked SIM card unless the correct PIN code is entered. If both phone lock and SIM card PIN is active the user must enter two separate codes at each start-up.

However, invalidating the IMEI does not necessarily prevent access to the phone itself, nor does the SIM card invalidation. Enabling phone lock at each start-up will prevent unauthorised access to data, but locking the phone to one specific SIM card only does not prevent somebody to access the content of the phone, as long as the original SIM card is used. Enabling the SIM card's PIN code will only have an effect after the phone have been powered off and then on again.

The only way to achieve protection of the phone's content and unauthorised use of the SIM card using currently available solutions is to use the phone locking feature described above, in combination with enabling the SIM PIN code. This solution is not optimal since it requires the user to always enter the PIN code every time the phone is powered on, and perhaps even the phone lock code, and the protection is not activated unless the phone first is powered off.

The present invention solves this problem by introducing a remote lock and control function into the phone. Then a user that looses his phone can send a special message, typically an SMS, to his lost phone that will lock the phone.

The document GB-A-2 380 356 relates to a system for disabling a mobile communication apparatus. A mobile telephone can be partially remotely locked by sending a locking message instructing the mobile telephone to disable. When rendered partially inoperable, it is arranged to receive commands to subsequently unlock the terminal.

### Summary of the invention

The invention is defined by the apparatus defined in claim 1. Further embodiments of the invention are defined in the dependent claims 2-11.

### Brief description of the drawings

The invention will be described below in detail with reference to the accompanying drawing, of which the only figure is a schematic view of an apparatus in accordance with the invention connected in a telecommunication network.

### Detailed description of preferred embodiments

The invention will be described in relation to a mobile phone. The invention is also applicable in other devices, e.g. communicators, electronic organisers and the like portable apparatuses capable of communicating via a telecommunication network.

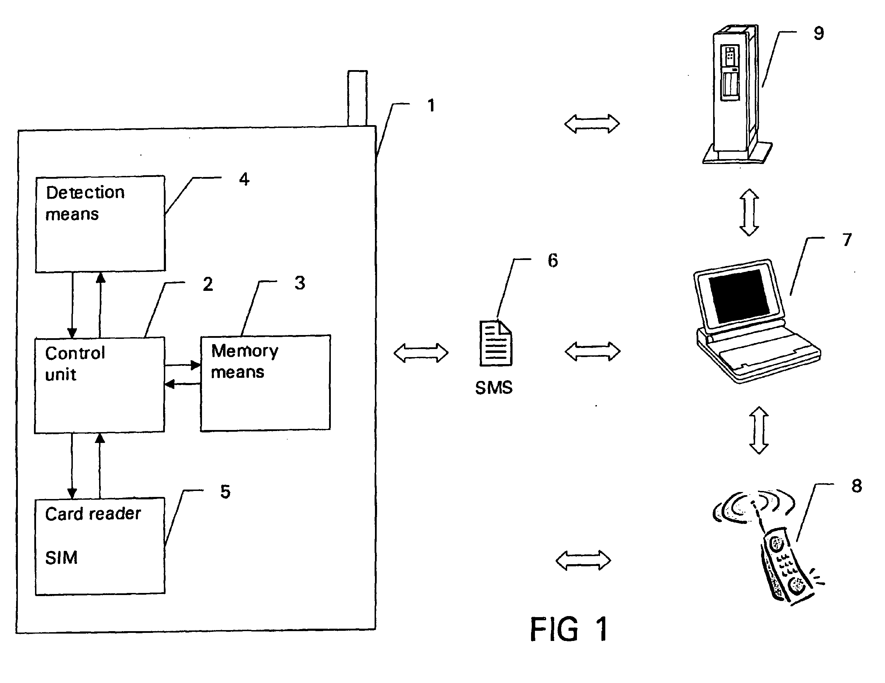

Fig. 1 shows a mobile phone 1 according to the invention. The phone contains the usual mobile phone functions for handling calls and messages, such as SMS (Short Message Service). The phone also contains a card reader 5 for a SIM card (Subscriber Identity Module) holding information about the phone number and also containing registers available for the user to store information. The phone also contains a built-in register or memory means 3 storing software and other information e.g. settings. The memory means 3 also contains a space available to the user for storing information. All these functions and means are conventional and not described in detail here. The telephone is arranged to communicate with other devices by means of a telecommunication network only symbolised by means of the block arrows.

The user often spends a lot of efforts loading information into the phone and/or the SIM card, such as messages received and sent, images such as photos, calendars and settings with regard to the operation of the phone, such as ring signals, profiles etc. When the user looses his phone including the SIM card, not only may an unauthorised person use the original user's subscription but also the sensitive and valuable contents of the phone are lost.

With the present invention the user is offered the possibility to lock the phone remotely by sending a special lock command to his phone. Suitably, the command is contained in a message 6 such as an SMS to the phone 1 and may be sent to the phone by another phone 8 or through a web site by means of a connected computer 7. The SMS 6 will contain a code and a specific tag. The phone 1 contains a detection means 4 adapted to detect the code and respond to the code by sending a command to the control unit 2 to render the phone at least partially inoperable, so that the unauthorised person may not use the phone.

The user initiates the function by means of the ordinary phone keys by entering the code, which of course should only be known to the phone owner. Preferably, the code is long, at least twenty characters chosen from the whole character set, in order to minimise the probability for a random message sent to the phone to lock the phone accidentally. When the code is set, the user may activate the lock function.

If the original owner gets his phone back he can unlock the phone and continue to use it as before. The user enters an unlocking command and then the phone requests the correct unlocking code to be unlocked. Alternatively, the phone is adapted to request the unlocking code automatically.

As an additional precaution, the SIM card PIN code may be activated, such that the SIM card can not be moved to another phone and be used there without entering the SIM card locking code.

If the user has not activated the SIM card PIN code when the phone is lost, he may activate it by means of another command sent in a message. This command may be sent in the same SMS as the lock command. Alternatively, the lock command may automatically activate the SIM card PIN code.

Also, when the lock function according to the invention is activated the phone should also be locked by means of the conventional phone lock mechanism, such that it can not be used with another SIM card without first unlocking the phone with the proper phone unlocking code. This way, the thief may not just switch off the phone and then use it with another SIM card. The user may select the unlocking code according to the invention to be the same as the conventional phone locking code.

In one embodiment, the phone remains in contact with the telecommunication network after having received the lock command by means of the SMS. Even though the phone is locked for ordinary use it can receive further messages. In accordance with the invention, the phone may further be adapted to receive commands to remotely control the phone. In this way, the original owner may send messages containing codes commanding the phone to upload information through the telecommunication network. Preferably, the phone is adapted to upload specific information, like the phone book, e-mails, SMS messages, MMS messages and pictures etc to a server 9 in the network, e.g. run by the telecommunication operator or someone else offering this service. From this server, the original owner may gain access by means of his user identity and a password, which may be identical to the unlocking code, for downloading the information to his computer 7 for forwarding e.g. to his new phone 8 or directly to a mobile phone 8.

The phone may also be adapted to keep track of its own position. In this case the specific information may comprise the phone position so that the phone may be found.

A further command could be to empty the phone completely as soon as all the specific information has been uploaded.

During the uploading of information, the phone's display should look normal, so that the upload is invisible to the unauthorised user. In this way it is avoided that the unauthorised user switches off the phone or interferes with the information transfer in another way.

The invention reduces the risk for unauthorised phone and data use when the phone is lost. It secures all valuable data contained in the phone and makes it possible to retrieve the data even if the phone is never recovered. The great advantage of this solution compared to the currently available solutions is that once it is set up by the user, it is completely transparent - no PIN codes that must be entered on start-up or anything else. The only time the user must actively do something is when the phone is actually lost.

## Claims

1. A mobile communication apparatus (1) capable of communicating via a telecommunication network, comprising a control unit (2) and registers (3) for controlling the operation of the apparatus, including receiving messages (6), and locking means (4) capable of detecting codes in messages (6) received and, in dependence of a lock code, sending a lock command to the control unit (2) for rendering the mobile communication apparatus (1) at least partially inoperable, wherein, when rendered partially inoperable, the apparatus is arranged to maintain contact with the telecommunication network and to receive commands for remotely controlling operation of the apparatus, **characterised in that** the commands include a command to upload specific information from the apparatus via the telecommunication network to a remote receiver (7, 8, 9).

2. An apparatus according to claim 1, **characterised in that** the specific information includes phone book, messages, images, settings or other user data.

3. An apparatus according to one of claims 1 or 2, **characterised in that** the apparatus is arranged to empty all registers (3, 5) after having uploaded specific information from the apparatus to a remote receiver (7, 8, 9).

4. An apparatus according to claim 1, 2 or 3, **characterised in that**, when rendered partially inoperable, the apparatus is arranged to receive a first unlocking code restoring the apparatus to normal operation.

5. An apparatus according to claim 1, 2, 3 or 4, **characterised in that** the apparatus further comprises a card reader (5) for reading a smart card containing control information necessary for the operation of the apparatus, and **in that** the locking means, when activated, is arranged to automatically lock the apparatus when a smart card is replaced by another.

6. An apparatus according to claims 5, **characterised in that** the commands include a command to lock the smart card, so that the smart card cannot be used in another apparatus.

7. An apparatus according to claims 6, **characterised in that** the command is a command to activate a PIN code of the smart card.

8. An apparatus according to claim 5, 6 or 7, **characterised in that**, when locked, the apparatus is arranged to receive a second unlocking code restoring the apparatus to normal operation.

9. An apparatus according to claim 8, **characterised in that** the first unlocking code is the same as the second unlocking code.

10. An apparatus according to any one of claims 5 to 9, **characterised in that** the smart card is a SIM card.

11. An apparatus according to any one of claims 1 to 10, **characterised in that** the apparatus is arranged to keep track of its position and to receive a command to upload information about its position via the telecommunication network to a remote receiver (7, 8, 9).

## Patentansprüche

1. Mobiles Kommunikationsgerät (1), das über ein Telekommunikationsnetzwerk kommunizieren kann, umfassend eine Steuereinheit (2) und Register (3) zur Steuerung des Betriebs des Geräts, beinhaltend den Empfang von Nachrichten (6) und ein Sperrmittel (4), das Codes in empfangenen Nachrichten (6) detektieren und in Abhängigkeit eines Sperrcodes einen Sperrbefehl an die Steuereinheit (2) senden kann, um das mobile Kommunikationsgerät (1) wenigstens teilweise funktionslos zu machen, worin das Gerät, wenn es teilweise funktionslos gemacht ist, eingerichtet ist, Verbindung mit dem Telekommunikationsnetzwerk aufrechtzuerhalten und Befehle zur ferngesteuerten Steuerung des Betriebs des Geräts zu empfangen, **dadurch gekennzeichnet, dass** die Befehle einen Befehl zum Hochladen bestimmter Informationen von dem Gerät über das Telekommunikationsnetzwerk an einen entfernten Empfänger (7, 8, 9) beinhalten.

2. Gerät gemäß Anspruch 1, **dadurch gekennzeichnet, dass** die bestimmten Informationen das Telefonbuch, Nachrichten, Bilder, Einstellungen oder andere Benutzerdaten beinhalten.

3. Gerät gemäß einem der Ansprüche 1 oder 2, **dadurch gekennzeichnet, dass** das Gerät eingerichtet ist, alle Register (3, 5) nach dem Hochladen bestimmter Informationen von dem Gerät an einen entfernten Empfänger (7, 8, 9) zu leeren.

4. Gerät gemäß einem der Ansprüche 1, 2 oder 3, **dadurch gekennzeichnet, dass** das Gerät, wenn es teilweise funktionslos gemacht ist, eingerichtet ist, einen ersten Entsperrcode zu empfangen, der den normalen Betrieb des Geräts wieder herstellt.

5. Gerät gemäß einem der Ansprüche 1, 2, 3 oder 4, **dadurch gekennzeichnet, dass** das Gerät ferner einen Kartenleser (5) zum Lesen einer Chipkarte, die für den Betrieb des Geräts notwendige Steuerinformationen enthält, umfasst, und dass das Sperrmittel, wenn es aktiviert ist, eingerichtet ist, das Gerät automatisch zu sperren, wenn eine Chipkarte durch eine andere ersetzt wird.

6. Gerät gemäß Anspruch 5, **dadurch gekennzeichnet, dass** die Befehle einen Befehl zum Sperren der Chipkarte beinhalten, so dass die Chipkarte nicht in einem anderen Gerät verwendet werden kann.

7. Gerät gemäß Anspruch 6, **dadurch gekennzeichnet, dass** der Befehl ein Befehl zum Aktivieren eines PIN-Codes der Chipkarte ist.

8. Gerät gemäß einem der Ansprüche 5, 6 oder 7, **dadurch gekennzeichnet, dass** das Gerät, wenn es gesperrt ist, eingerichtet ist, einen zweiten Entsperrcode zu empfangen, der den normalen Betrieb des Geräts wieder herstellt.

9. Gerät gemäß Anspruch 8, **dadurch gekennzeichnet, dass** der erste Entsperrcode derselbe ist wie der zweite Entsperrcode.

10. Gerät gemäß einem der Ansprüche 5 bis 9, **dadurch gekennzeichnet, dass** die Chipkarte eine SIM-Karte ist.

11. Gerät gemäß einem der Ansprüche 1 bis 10, **dadurch gekennzeichnet, dass** das Gerät eingerichtet ist, seine Position zu verfolgen und einen Befehl zu empfangen, um Informationen über seine Position über das Telekommunikationsnetzwerk an einen entfernten Empfänger (7, 8, 9) hochzuladen.

## Revendications

1. Dispositif (1) de communication mobile pouvant communiquer par l'intermédiaire d'un réseau de télécommunication, comprenant un module (2) de commande ainsi que des registres (3) pour commander le fonctionnement du dispositif, comprenant des messages (6) de réception, et un moyen (4) de verrouillage pouvant détecter des codes dans des messages (6) reçus et, selon un code de verrouillage, envoyer une commande de verrouillage au module (2) de commande pour rendre le dispositif (1) de communication mobile au moins partiellement inexploitable, dans lequel, une fois rendu partiellement inexploitable, le dispositif est agencé pour maintenir un contact avec le réseau de télécommunication et pour recevoir des commandes pour commander à distance un fonctionnement du dispositif, **caractérisé en ce que** les commandes comprennent une commande pour télécharger des informations spécifiques à partir du dispositif par l'intermédiaire du réseau de télécommunication vers un récepteur (7, 8, 9) distant.

2. Dispositif selon la revendication 1, **caractérisé en ce que** les informations spécifiques comprennent un annuaire téléphonique, des messages, des images, des configurations ou d'autres données utilisateur.

3. Dispositif selon l'une des revendications 1 et 2, **caractérisé en ce que** le dispositif est agencé pour vider tous les registres (3, 5) après avoir téléchargé des informations spécifiques à partir du dispositif vers un récepteur (7, 8, 9) distant.

4. Dispositif selon la revendication 1, 2 ou 3,
**caractérisé en ce que**, une fois rendu partiellement inexploitable, le dispositif est agencé pour recevoir un premier code de déverrouillage rétablissant le dispositif à un fonctionnement normal.

5. Dispositif selon la revendication 1, 2, 3 ou 4, **caractérisé en ce que** le dispositif comporte de plus un lecteur (5) de cartes pour lire une carte intelligente contenant des informations de commande nécessaires pour le fonctionnement du dispositif, et **en ce que** le moyen de verrouillage, une fois activé, est agencé pour verrouiller automatiquement le dispositif lorsqu'une carte intelligente est remplacée par une autre.

6. Dispositif selon la revendication 5, **caractérisé en ce que** les commandes comprennent une commande pour verrouiller la carte intelligente, de sorte que la carte intelligente ne puisse pas être utilisée dans un autre dispositif.

7. Dispositif selon la revendication 6, **caractérisé en ce que** la commande est une commande destinée à activer un code PIN de la carte intelligente.

8. Dispositif selon la revendication 5, 6 ou 7, **caractérisé en ce que**, une fois verrouillé, le dispositif est agencé pour recevoir un deuxième code de déverrouillage rétablissant le dispositif à un fonctionnement normal.

9. Dispositif selon la revendication 8, **caractérisé en ce que** le premier code de déverrouillage est identique au deuxième code de déverrouillage.

10. Dispositif l'une quelconque des revendications 5 à 9, **caractérisé en ce que** la carte intelligente est une carte SIM.

11. Dispositif selon l'une quelconque des revendications 1 à 10, **caractérisé en ce que** le dispositif est agencé pour suivre sa position et pour recevoir une commande pour télécharger des informations concernant sa position par l'intermédiaire du réseau de télécommunication vers un récepteur (7, 8, 9) distant.
